# EUROPÄISCHE PATENTSCHRIFT

(11) **EP 1 257 752 B1**
(45) Veröffentlichungstag und Bekanntmachung des Hinweises auf die Patenterteilung: **20.08.2003**
(21) Anmeldenummer: 01915258.6
(22) Anmeldetag: 15.02.2001
(51) Int. Cl.: F16H 63/30, F16D 27/118, F16D 21/04

(54) **ELEKTROMAGNETISCHE SCHALTEINRICHTUNG**
ELECTROMAGNETIC SHIFT ARRANGEMENT
DISPOSITIF DE COMMUTATION ELECTROMAGNETIQUE

(30) Priorität: 21.02.2000 DE 10007847
(43) Veröffentlichungstag der Anmeldung: 20.11.2002
(73) Patentinhaber: ZF FRIEDRICHSHAFEN Aktiengesellschaft, 88038 Friedrichshafen (DE)
(72) Erfinder: PETZOLD, Rainer, 88045 Friedrichshafen (DE)
(86) Internationale Anmeldenummer: EP0101676
(87) Internationale Veröffentlichungsnummer: WO01063151

(56) Entgegenhaltungen:
- EP-A- 0 809 049
- CH-A- 250 456
- FR-A- 2 583 489
- GB-A- 884 233
- US-A- 5 080 214
- US-A- 5 460 060
- PATENT ABSTRACTS OF JAPAN vol. 016, no. 072 (M-1213), 21. Februar 1992 (1992-02-21) -& JP 03 260438 A (HINO MOTORS LTD), 20. November 1991 (1991-11-20)

## Beschreibung

Die Erfindung betrifft eine Schalteinrichtung für ein Fahrzeuggetriebe nach dem Oberbegriff von Anspruch 1, wie sie aus der FR-A-25 83 489 bekannt ist.

Aus der US 5,460,060 ist weiterhin eine Schalteinrichtung für ein Getriebe bekannt, die elektromagnetisch aktiviert wird. Dabei ist für jedes zu schaltende Übersetzungspaar, zwischen denen sich eine Schalteinrichtung befindet, eine auf einer Stange angeordnete Schaltgabel vorgesehen, die in eine Schaltklaue eingreift. Durch die axiale Bewegung der Schaltklaue kann eine Getriebewelle, auf der die Zahnräder der jeweiligen Übersetzung drehbar angeordnet sind, mit jeweils einem der Zahnräder verbunden werden. Auf der Stange befindet sich die Schaltgabel durch je eine seitlich angeordnete Feder in eine Mittelposition gezwungen, aus der heraus sie axial nach Aktivierung von je einem Magneten bewegt werden kann. Dabei bewegt sich die Schaltgabel axial entgegen der Richtung des aktivierten Magneten. Das Ausschalten der Übersetzung erfolgt nach Beendigung der Aktivierung des Magneten durch die jeweilige Feder. Die Schalteinrichtung weist den Nachteil auf, das sie konstruktiv mit einer hohen zu bewegenden Masse ausgeführt ist. Die Ausschaltung der Schalteinrichtung erfolgt lediglich über die Federkraft der vorgesehenen Federn.

Der Erfindung liegt die Aufgabe zugrunde, eine Schalteinrichtung aufzuzeigen, deren bei der Schaltung zu bewegenden Massen möglichst gering sind.

Die Aufgabe wird gelöst durch eine Schalteinrichtung mit den Merkmalen des Anspruchs 1. Ausgestaltungen sind Gegenstand von Unteransprüchen.

Erfindungsgemäß wird eine elektromagnetische Schalteinrichtung für ein Getriebe vorgeschlagen mit auf einer Getriebewelle um eine Achse drehbar angeordneten Zahnrädern. Zur Bildung einer Übersetzungsstufe sind die Zahnräder mit der Getriebewelle drehfest verbindbar durch eine axiale Bewegung einer Schaltklaue entlang der Drehachse der Getriebewelle. Die Schalteinrichtung weist weiter eine elektromagnetische Vorrichtung auf, die geeignet ist zur axialen Bewegung der Schaltklaue entlang der Achse. Diese elektromagnetische Vorrichtung ist direkt im Bereich der Schaltklaue angeordnet ist und wirkt auf die Schaltklaue unmittelbar ohne Zuhilfenahme und Zwischenschaltung einer Schaltgabel ein. Somit wirkt die elektromagnetische Vorrichtung direkt auf die Schaltklaue ein und ermöglicht damit eine bedeutende Reduzierung der beim Schaltvorgang zu bewegenden Massen. Erfahrungen haben gezeigt, daß insbesondere zum Ausschalten einer Übersetzungsstufe relativ hohe Schaltkräfte benötigt werden. Die benötigten Ausschaltkräfte stehen in Abhängigkeit von den zu schaltenden Massen und der erreichbaren Schaltgeschwindigkeit. Je geringer die zu schaltenden Massen und je höher die erreichbare Schaltgeschwindigkeit sind, desto kleiner kann die Schaltkraft sein. Bei entsprechend dimensionierten elektromagnetischen Vorrichtungen lassen sich damit extrem kurze Schaltzeiten verwirklichen, die insbesondere bei Schaltungen bei nicht ebener Fahrbahn vorteilhaft durchgeführt werden können. In einer Ausgestaltung sind damit durch die entsprechende Ansteuerung der elektromagnetischen Vorrichtung unterschiedliche Lastabbauzeiten einstellbar, die eine längere Lastabbauzeit, beispielsweise bei einem ebenen Fahrbahnverlauf, gewährleisten und kürzere Lastabbauzeiten bei einer Steigung der Fahrbahn, wodurch ansonsten eine unvorteilhafte Geschwindigkeitsabnahme des Fahrzeugs und im ungünstigsten Fall ein Rückrollen des Fahrzeugs verbunden sein könnte. In einer vorteilhaften Ausgestaltung ist für jede axiale Bewegungsrichtung entlang der Achse der Getriebewelle, die die zu schaltenden Zahnräder aufweist, je eine elektromagnetische Vorrichtung vorgesehen. Eine vorteilhafte Ausführungsform der Erfindung zeigt, daß das in der elektromagnetischen Vorrichtung zu erzeugende Magnetfeld in seiner Wirkrichtung umkehrbar ist. Damit läßt sich zur Erzeugung von Bewegungen der Schaltklaue in beiden Bewegungsrichtungen entlang der Achse eine Ansteuerung der Magnetfelder in unterschiedlichen Wirkrichtungen verwirklichen. Das führt dazu, daß in einer vorteilhaften Ausgestaltung nur eine elektromagnetische Vorrichtung für beide Bewegungsrichtungen entlang der Achse vorgesehen ist. Durch die Ansteuerung der Magnetfelder kann in einer Ausgestaltung eine Umkehrung des Magnetfeldes zur Bildung einer Dämpfungseinrichtung gegen einen Anschlag der Schaltklaue gebildet werden und in einer anderen vorteilhaften Ausgestaltung wird die Schaltklaue durch die elektromagnetische Vorrichtung in einer Neutralstellung gehalten. In einer Ausführungsform wird die Schaltklaue durch Federkraft in einer Neutralstellung gehalten. Eine Ausführungsform schließlich zeigt, daß die elektromagnetischen Vorrichtungen gehäusefest montiert sind und elektrische Zuleitungen in oder am Gehäuse des Getriebes vorgesehen sind. Die elektromagnetischen Vorrichtungen sind magnetisch gegenüber nicht zu schaltenden Teilen des Getriebes isoliert.

Die Erfindung wird anhand einer Zeichnung näher erläutert.

Es zeigen:
- Fig. 1: zwei elektromagnetische Vorrichtungen für zwei Übersetzungsstufen und
- Fig. 2: eine elektromagnetische Vorrichtung für zwei Übersetzungsstufen.

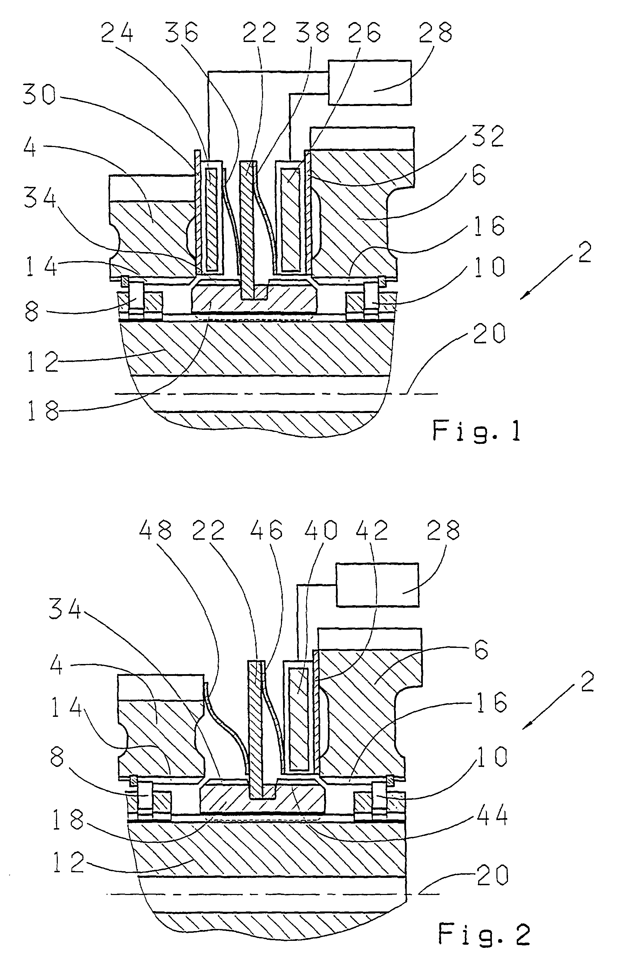

Die Fig. 1 zeigt einen Ausschnitt aus einem Getriebe 2. Ein erstes Zahnrad 4 und ein zweites Zahnrad 6 sind durch Lagerungen 8 und 10 auf einer Getriebewelle 12 drehbar gelagert. Die Zahnräder 4 und 6 weisen je eine Innenverzahnung 14 und 16 auf. Eine Schaltklaue 18 ist auf der Getriebewelle 12 drehfest aber axial verschiebbar entlang einer Achse 20 der Getriebewelle 12. Eine Scheibe 22 greift in die Schaltklaue 18 ein oder ist mit dieser einstückig ausgebildet.
Auf je einer Seite der Scheibe 22 ist je eine elektromagnetische Vorrichtung 24 bzw. 26 angeordnet, die in einer hier nicht gezeigten Weise am Gehäuse des Getriebes stationär befestigt ist. Die elektromagnetischen Vorrichtungen 24 und 26 sind mit einer Steuereinrichtung 28 verbunden. Zwischen den elektromagnetischen Vorrichtungen 24 und 26 und den jeweiligen Zahnrädern 4 und 6 ist je eine elektromagnetische Isolierscheibe 30 bzw. 32 vorgesehen.

Zur drehfesten Verbindung des Zahnrades 4 mit der Getriebewelle 12 und zur damit erzeugten Bildung einer Übersetzungsstufe des Getriebes 2 wird die Schaltklaue 18 axial entlang der Achse 20 in der Zeichnungsebene nach links bewegt. Dies geschieht durch die Ansteuerung der elektromagnetischen Vorrichtung 24 durch die Steuereinrichtung 28. Die elektromagnetische Vorrichtung erzeugt ein Magnetfeld, durch das die Scheibe 22 in Richtung auf das Zahnrad 4 gezogen wird. Eine Außenverzahnung 34 an der Schaltklaue 18 greift dann bei synchronen Drehzahlen von Schaltklaue 18 und Zahnrad 4 in die Innenverzahnung 14 des Zahnrades 4 ein. Dadurch wird das Zahnrad 4 drehfest mit der Getriebewelle 12 verbunden. Zur Unterstützung der Bewegung der Schaltklaue 18 in Richtung auf das Zahnrad 4 kann auch die elektromagnetische Vorrichtung 26 angesteuert werden. In der elektromagnetischen Vorrichtung 26 wird ebenfalls ein Magnetfeld erzeugt, das jedoch so gerichtet ist, daß es die Scheibe 22 in Richtung auf das Zahnrad 4 abstößt. Dadurch können die elektromagnetischen Vorrichtungen entsprechend kein ausgestaltet werden oder die Schaltkraft entsprechend vergrößert werden.

Zur Auflösung der drehfesten Verbindung wird die elektromagnetische Vorrichtung 24 so angesteuert, daß die Scheibe 22 abgestoßen wird und damit die Verzahnung 34 der Schaltklaue 18 sich aus der Verzahnung 14 des Zahnrades 4 löst. Auch hier kann eine entsprechende Unterstützung durch die elektromagnetische Vorrichtung 26 vorgesehen sein, durch deren Magnetfeld dann die Scheibe 22 angezogen wird in Richtung auf das Zahnrad 6.

Soll die Schaltklaue 18 in der Neutralstellung zwischen den beiden Zahnrädern 4 und 6 verharren, kann dies durch eine entsprechende Ansteuerung beider elektromagnetischen Vorrichtungen 24 und 26 geschehen. Die beiden dann erzeugten Magnetfelder können entweder in einer anziehenden oder einer abstoßenden Weise die Scheibe 22 und damit die Schaltklaue 18 in einer neutralen Zwischenstellung halten. Die Zwischenstellung kann auch durch zwei Tellerfedern 36 und 38 erzeugt werden, die jeweils zwischen der Scheibe 22 und der jeweiligen elektromagnetischen Vorrichtung 24 bzw. 26 liegt. Bei einer Bewegung der Scheibe 22 in die eine oder andere Richtung werden die Tellerfedern 36 und 38 entsprechend zusammengedrückt.

Eine Verbindung des Zahnrades 6 mit der Getriebewelle 12 durch Schaltung aus der Neutralstellung heraus geschieht in entsprechend umgekehrter Weise.

Die Fig. 2 zeigt einen Ausschnitt aus einem Getriebe 2. Ein erstes Zahnrad 4 und ein zweites Zahnrad 6 sind durch Lagerungen 8 und 10 auf einer Getriebewelle 12 drehbar gelagert. Die Zahnräder 4 und 6 weisen je eine Innenverzahnung 14 und 16 auf. Eine Schaltklaue 18 ist auf der Getriebewelle 12 drehfest aber axial verschiebbar entlang einer Drehachse 20 der Getriebewelle 12. Eine Scheibe 22 greift in die Schaltklaue 18 ein oder ist mit dieser einstückig ausgebildet.
Auf einer Seite der Scheibe 22 ist eine elektromagnetische Vorrichtung 40 angeordnet, die in einer hier nicht gezeigten Weise am Gehäuse des Getriebes stationär befestigt ist. Die elektromagnetischen Vorrichtungen 40 ist mit einer Steuereinrichtung 28 verbunden. Zwischen der elektromagnetischen Vorrichtung 40 und dem Zahnrad 6 ist eine elektromagnetische Isolierscheibe 42 vorgesehen.

Zur drehfesten Verbindung des Zahnrades 6 mit der Getriebewelle 12 und zur damit erzeugten Bildung einer Übersetzungsstufe des Getriebes 2 wird die Schaltklaue 18 axial entlang der Achse 20 in der Zeichnungsebene nach rechts bewegt. Dies geschieht durch die Ansteuerung der elektromagnetischen Vorrichtung 40 durch die Steuereinrichtung 28. Die elektromagnetische Vorrichtung 40 erzeugt ein Magnetfeld, durch das die Scheibe 22 in Richtung auf das Zahnrad 6 angezogen wird. Eine Außenverzahnung 44 an der Schaltklaue 18 greift dann bei synchronen Drehzahlen von Schaltklaue 18 und Zahnrad 6 in die Innenverzahnung 16 des Zahnrades 6 ein. Dadurch wird das Zahnrad 6 drehfest mit der Getriebewelle 12 verbunden.

Zur Auflösung der drehfesten Verbindung wird die elektromagnetische Vorrichtung 40 so angesteuert, daß die Scheibe 22 abgestoßen wird und damit die Verzahnung 44 der Schaltklaue 18 sich aus der Verzahnung 16 des Zahnrades 6 löst. Durch eine zwischen Scheibe 22 und elektromagnetischer Vorrichtung 40 vorgesehene Tellerfeder 46 kann eine Unterstützung erfolgen, wodurch die Scheibe 22 abgestoßen wird in Richtung auf das Zahnrad 4.

Soll die Schaltklaue 18 in der Neutralstellung zwischen den beiden Zahnrädern 4 und 6 verharren, kann dies durch eine entsprechende Ansteuerung der elektromagnetischen Vorrichtung 40 geschehen. Das dann erzeugte Magnetfelder kann entweder in einer anziehenden oder einer abstoßenden Weise die Scheibe 22 und damit die Schaltklaue 18 in einer neutralen Zwischenstellung halten. Die Zwischenstellung kann auch durch zwei Tellerfedern 46 und 48 erzeugt werden. Die Tellerfeder 46 liegt zwischen der Scheibe 22 und der elektromagnetischen Vorrichtung 40 und die Tellerfeder 48 liegt zwischen der Scheibe 22 und dem Zahnrad 4. Bei einer Bewegung der Scheibe 22 in die eine oder andere Richtung werden die Tellerfedern 46 und 48 entsprechend zusammengedrückt.

Eine Verbindung des Zahnrades 4 mit der Getriebewelle 12 durch Schaltung aus der Neutralstellung heraus geschieht durch Ansteuerung der elektromagnetischen Vorrichtung 40 durch die Steuereinrichtung 28 in der Weise, daß ein abstoßendes Magnetfeld erzeugt wird und die Scheibe 22 und damit die Schaltklaue 18 von der elektromagnetischen Vorrichtung 40 abgestoßen wird in Richtung auf das Zahnrad 4. Die Außenverzahnung 34 an der Schaltklaue 18 greift dann bei synchronen Drehzahlen von Schaltklaue 18 und Zahnrad 4 in die Innenverzahnung 14 des Zahnrades 4 ein. Dadurch wird das Zahnrad 4 drehfest mit der Getriebewelle 12 verbunden.

### Bezugszeichen

- 2: Getriebe
- 4: Zahnrad
- 6: Zahnrad
- 8: Lagerung
- 10: Lagerung
- 12: Getriebewelle
- 14: Innenverzahnung
- 16: Innenverzahnung
- 18: Schaltklaue
- 20: Achse
- 22: Scheibe
- 24: elektromagnetische Vorrichtung
- 26: elektromagnetische Vorrichtung
- 28: Steuereinrichtung
- 30: Isolierscheibe
- 32: Isolierscheibe
- 34: Außenverzahnung
- 36: Tellerfeder
- 38: Tellerfeder
- 40: elektromagnetische Vorrichtung
- 42: Isolierscheibe
- 44: Außenverzahnung
- 46: Tellerfeder
- 48: Tellerfeder

## Patentansprüche

1. Elektromagnetische Schalteinrichtung für ein Getriebe (2) mit auf einer Getriebewelle (12) um eine Achse (20) drehbar angeordneten Zahnrädern (4, 6), die zur Bildung einer Übersetzungsstufe mit der Getriebewelle (12) drehfest verbindbar sind durch eine axiale Bewegung einer Schaltklaue (18) entlang der Achse (20), und die eine elektromagnetische Vorrichtung (24, 40) umfasst, die geeignet ist zur axialen Bewegung der Schaltklaue (18) entlang der Achse (20) und die angeordnet ist im Bereich der Schaltklaue (18), auf die sie unmittelbar ohne Schaltgabel einwirkt, **dadurch gekennzeichnet, dass** ein in der elektromagnetischen Vorrichtung (24, 26, 40) zu erzeugendes Magnetfeld in seiner Wirkrichtung umkehrbar ist zur Erzeugung von Bewegungen der Schaltklaue (18) in beiden Bewegungsrichtungen entlang der Achse (20).

2. Elektromagnetische Schalteinrichtung nach Anspruch 1, **dadurch gekennzeichnet , dass** die eine elektromagnetische Vorrichtung (40) für beide Bewegungsrichtungen entlang der Achse (20) vorgesehen ist.

3. Elektromagnetische Schalteinrichtung nach Anspruch 1, **dadurch gekennzeichnet, dass** in der Schalteinrichtung eine weitere elektromagnetische Vorrichtungen vorgesehen ist und dass bei einer Schaltbewegung in einer axialen Richtung beide elektromagnetischen Vorrichtungen (24, 26) unabhängig voneinander in unterschiedliche Wirkrichtungen der Magnetfelder ansteuerbar sind, wodurch sich die Schaltklaue (18) in die axiale Richtung bewegt.

4. Elektromagnetische Schalteinrichtung nach einem der Ansprüche 1 bis 3, **dadurch gekennzeichnet, dass** durch die Ansteuerung der elektromagnetischen Vorrichtungen (24, 26, 40) unterschiedliche Lastabbauzeiten einstellbar sind.

5. Elektromagnetische Schalteinrichtung nach einem der Ansprüche 1 bis 4, **dadurch gekennzeichnet, dass** durch die Ansteuerung eine Umkehrung des Magnetfeldes zur Bildung einer Dämpfungseinrichtung gegen einen Anschlag der Schaltklaue (18) gebildet wird.

6. Elektromagnetische Schalteinrichtung nach einem der Ansprüche 1 bis 5, **dadurch gekennzeichnet, dass** die Schaltklaue (18) durch die elektromagnetische Vorrichtung (24, 26, 40) in einer Neutralstellung gehalten ist.

7. Elektromagnetische Schalteinrichtung nach einem der Ansprüche 1 bis 5, **dadurch gekennzeichnet, dass** die Schaltklaue (18) durch Federkraft in einer Neutralstellung gehalten ist.

## Claims

1. The invention relates to an electromagnetic control unit for a transmission (2) comprising gear wheels (4, 6) arranged on a transmission shaft (12) and rotating around an axis (20) and which by means of the axial movement of a shift dog (18) along the axis (20) may be rotatably fixed to the transmission shaft (12) to form a gear ratio, and comprising an electromagnetic device (24, 40) suited for axial movement of the shift dog (18) along the axis (20), and which is arranged in the area of the shift dog (18) on which it acts directly without a shift fork, **characterized in that** the direction of action of a magnetic field generated in the electromagnetic device (24, 26, 40) can be reversed to bring about movement of the shift dog (18) in both directions of movement along the axis (20).

2. Electromagnetic control unit according to claim 1, **characterized in that** the single electromagnetic device (40) is provided for both directions of movement along the axis (20).

3. Electromagnetic control unit according to claim 1, **characterized in that** another electromagnetic device is provided in the control unit and that in case of a control movement in axial direction both electromagnetic devices (24, 26) are independently controllable in different directions of action of the magnetic fields, as a result of which the shift dog (18) moves in axial direction.

4. Electromagnetic control unit according to one of the claims 1 to 3, **characterized in that** due to the control of the electromagnetic devices (24, 26, 40) different load reduction periods can be set.

5. Electromagnetic control unit according to one of the claims 1 to 4, **characterized in that** as a result of the control action the magnetic field is reversed to create a damping effect against the impact of the shift dog (18).

6. Electromagnetic control unit according to one of the claims 1 to 5, **characterized in that** the shift dog (18) is retained in a neutral position by the electromagnetic device (24, 26, 40).

7. Electromagnetic control unit according to one of the claims 1 to 5, **characterized in that** the shift dog (18) is retained in a neutral position by a spring force.

## Revendications

1. Dispositif de commande électromagnétique pour une boîte de vitesses (2) doté d'engrenages pivotants (4, 6) autour d'un axe (20) et disposés sur un arbre de boîte de vitesses (12), sachant que pour la création d'un étage de démultiplication ces engrenages peuvent être connectés de façon résistante à la torsion avec l'arbre de la boîte de vitesses (12) grâce à un déplacement axial d'un crabot (18) dans le sens de l'axe (20), et sachant que ce dispositif comprend un équipement électromagnétique (24, 40) qui est approprié au déplacement axial du crabot (18) dans le sens de l'axe (20), et sachant que ce dispositif est disposé dans la zone du crabot (18) sur lequel il agit directement et sans fourchette de commande, **caractérisé en ce que** la direction d'action d'un champ magnétique, qui doit être créé dans cet équipement électromagnétique (24, 26, 40), peut être inversé pour la génération de mouvements du crabot (18) dans les deux sens de déplacement le long de l'axe (20).

2. Dispositif de commande électromagnétique selon la revendication 1, **caractérisé en ce que** l'un des équipements électromagnétiques (40) est prévu pour les deux sens de déplacement le long de l'axe (20).

3. Dispositif de commande électromagnétique selon la revendication 1, **caractérisé en ce que** dans le dispositif de commande est prévu un autre dispositif électromagnétique et **en ce que** lors d'un mouvement de changement de vitesse dans un sens axial les deux dispositifs électromagnétiques (24, 26) peuvent être pilotés, l'un indépendamment de l'autre, dans différents sens d'action des champs magnétiques, entraînant un déplacement du crabot (18) dans le sens axial.

4. Dispositif de commande électromagnétique selon une des revendications 1 à 3, **caractérisé en ce que** grâce au pilotage des dispositifs électromagnétiques (24, 26, 40) sont réglables différents temps de réduction de la charge.

5. Dispositif de commande électromagnétique selon une des revendications 1 à 4, **caractérisé en ce que** par le pilotage est provoquée une inversion du champ magnétique pour la création d'un dispositif d'amortissement contre une butée du crabot (18).

6. Dispositif de commande électromagnétique selon une des revendications 1 à 5, **caractérisé en ce que** le crabot (18) est maintenu par un dispositif électromagnétique (24, 26, 40) dans une position de point mort.

7. Dispositif de commande électromagnétique selon une des revendications 1 à 5, **caractérisé en ce que** le crabot (18) est maintenu par la force d'un ressort dans une position de point mort.
